# FASCICULE DE BREVET EUROPEEN

(11) **EP 2 835 666 B1**
(45) Date de publication et mention de la délivrance du brevet: **16.09.2020**
(21) Numéro de dépôt: 14179932.0
(22) Date de dépôt: 05.08.2014
(51) Int. Cl.: G01V 3/15

(54) **Détecteur portatif de détection de métaux incluant un système évolué de mise en veille automatique**
Tragbarer Detektor zur Metalldetektion, der ein hoch entwickeltes automatisches Standby-System umfasst
Portable detector for detecting metals, including an advanced standby system

(30) Priorité: 05.08.2013 FR 1357787
(43) Date de publication de la demande: 11.02.2015
(73) Titulaire: Costruzioni Elettroniche Industriali Automatismi S.p.A. C.E.I.A. S.P.A., 52041 Civitella in Val di Chiana Arezzo (IT)
(72) Inventeur: Manneschi, Alessandro, 52100 Arezzo (IT)
(74) Mandataire: Regimbeau

(56) Documents cités:
- WO-A1-99/27391
- US-A1- 2011 260 865
- US-B1- 7 296 683
- US-B1- 7 755 360

## Description

La présente invention concerne le domaine technique général des détecteurs portatifs, notamment pour la détection de métaux, par exemple lors de l'accès à une salle d'embarquement dans un aéroport, ou tout autre lieu similaire d'accès contrôlé.

### PRESENTATION DE L'ART ANTERIEUR

On connait des dispositifs portatifs pour la détection de métaux comprenant généralement :
- un manche pour la préhension du dispositif par un opérateur, le manche comportant une source d'alimentation électrique autonome tel qu'une pile ou une batterie, et
- une tête comportant :
   - des moyens de mesure incluant un transducteur inductif, tels qu'une bobine homopolaire, pour la mesure de la variation de son inductance et/ou la mesure des courants parasitaires induites dans les métaux à détecter, et
   - des moyens de traitement incluant un microprocesseur, tels qu'une carte électronique, pour détecter la présence de parties métalliques et envoyer une commande d'alerte à une alarme du détecteur.

Ces détecteurs comprennent généralement une fonction de mise en veille programmée. Lorsque cette fonction de mise en veille est active, les moyens de mesure sont rendus inactifs, c'est-à-dire qu'ils n'émettent plus de champ magnétique. Ceci permet de limiter la consommation d'énergie du détecteur.

La fonction de mise en veille du détecteur est généralement activée si, après une période de temps donnée, l'opérateur n'a pas actionné de touche du détecteur. Pour éviter que la fonction de mise en veille ne s'active durant l'examen d'une personne devant être contrôlée, cette période de temps donnée est généralement choisie supérieure ou égale à dix minutes. Cela signifie que le détecteur émet des ondes pendant une période de temps supérieure ou égale à dix minutes.

Durant toute la période de temps précédent la mise en veille du détecteur, l'opérateur doit donc maintenir le détecteur à distance :
- d'autres dispositifs dont le fonctionnement est susceptible d'être altéré par les ondes émises par le détecteur,
- de toute matière métallique afin d'éviter que le détecteur n'émette une alarme sonore continue intempestive.

En effet, dans le cas où l'operateur est forcé par les circonstances opératives, à poser le détecteur sur une surface contenant des métaux, le détecteur émet une alarme continue et, par conséquent, ne peut plus passer dans un état de veille.

Il y a donc un besoin pour un nouveau détecteur portatif dans lequel une fonction de mise en veille du détecteur peut être activée plus rapidement que dans les détecteurs portatifs de l'art antérieur, tout en garantissant que cette fonction de mise en veille ne s'active pas durant l'examen d'une personne devant être contrôlée.

Le document US 2011/0260865 décrit un procédé pour limiter des fausses alarmes dans un détecteur de métaux, consistant à équiper un portique détecteur d'un capteur de vibrations et à ne valider un signal d'alarme que si aucune vibration du portique n'est détectée.

Le document US 7296683 décrit un détecteur de métal ferreux consistant à placer un détecteur au niveau de l'embouchure du récipient.

### PRESENTATION DE L'INVENTION

A cet effet, l'invention propose un détecteur portatif pour la détection de métal, tel que défini en revendication 1 annexée.

Ainsi, la fonction de mise en veille du détecteur peut être activée plus rapidement qu'avec les détecteurs portatifs de l'art antérieur.

Ceci permet de limiter les risques de perturbations et d'interférences électromagnétiques générés par le détecteur lorsque le transducteur inductif de celui-ci émet des ondes électromagnétiques.

Ceci permet en outre d'améliorer le rendement énergétique du détecteur en limitant l'énergie électrique consommée du fait de l'émission d'ondes électromagnétiques par le transducteur inductif lorsque le détecteur n'est pas utilisé.

Ceci permet enfin de faciliter l'utilisation du détecteur par l'opérateur, celui-ci n'étant pas obligé de maintenir le détecteur hors de portée de parties métalliques ou d'autres dispositifs pendant une longue durée précédent la mise en veille du détecteur.

Des aspects préférés mais non limitatifs du système selon l'invention sont les suivants :
- le contrôleur commande l'activation de la fonction de mise en veille si les conditions suivantes sont vérifiées :
   ∘ l'amplitude du signal mesuré par le transducteur inductif est constante pendant une période de temps prédéterminée, et
   ∘ la valeur de déplacement du signal mesuré par le capteur est nulle pendant cette période prédéterminée , et
   ∘ la valeur d'orientation du signal mesuré par le capteur est constante pendant cette période prédéterminée ;
- le contrôleur commande l'activation de la fonction de mise en veille si la valeur d'orientation est telle que la tête du détecteur s'étend dans un plan horizontal ;
- le capteur est un accéléromètre trois axes ;
- le contrôleur commande la désactivation de la fonction de mise en veille en fonction des signaux reçus du capteur ;
- le contrôleur commande la désactivation de la fonction de mise en veille si au moins l'une des conditions suivantes est vérifiée :
   ∘ la valeur de déplacement du détecteur varie pendant un intervalle de temps donné, et/ou
   ∘ la valeur d'orientation du signal mesuré par le capteur varie pendant l'intervalle de temps donné ;
- le contrôleur commande la désactivation de la fonction de mise en veille si la valeur d'orientation du signal mesuré par le capteur est différente d'une valeur d'orientation de référence dans laquelle la tête du détecteur s'étend dans un plan horizontal.

### PRESENTATION DES FIGURES

D'autres caractéristiques, buts et avantages de la présente invention ressortiront encore de la description qui suit, laquelle est purement illustrative et non limitative et doit être lue au regard des dessins annexés sur lesquels :
- La figure 1 illustre un exemple de détecteur portatif,
- La figure 2 illustre schématiquement des éléments du détecteur portatif,
- La figure 3 illustre un schéma de principe d'étapes préalables à la mise en veille du détecteur portatif.

### DESCRIPTION DETAILLEE

On va maintenant décrire plus en détail un exemple de détecteur portatif selon l'invention en référence aux figures. Dans ces différentes figures, les éléments équivalents portent les mêmes références numériques.

### 1. Détecteur

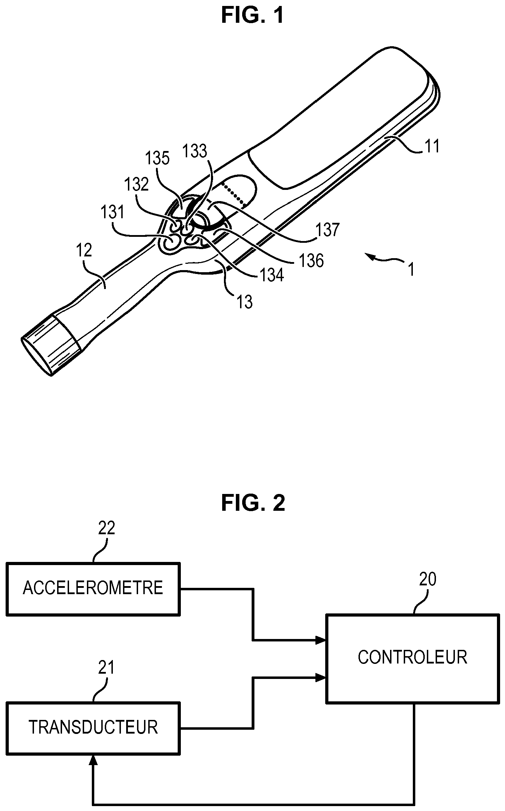

En référence à la figure 1, on a illustré un exemple de détecteur 1 selon l'invention. Le détecteur comprend une tête 11, un manche 12 et un corps 13 entre la tête 11 et le manche 12.

### 1.1. Tête

La tête 11 du détecteur comporte un transducteur inductif 21 pour la mesure d'une inductance générée. Le transducteur inductif 21 permet de générer un champ magnétique. Il peut être constitué d'un ou plusieurs bobinages bien connus de l'homme de l'art.

Dans un mode de réalisation, le transducteur inductif 21 est formé d'un simple bobinage constituant émetteur et récepteur.

Dans un autre mode de réalisation, le transducteur 21 est formé de deux bobinages formant respectivement, et le cas échéant alternativement, émetteur et récepteur.

Dans tous les cas, les bobinages comprennent de préférence plusieurs boucles en série de sens inversés permettant de neutraliser les effets de parasites externes.

Par ailleurs, le transducteur inductif 21 peut avantageusement comprendre des bobinages décalés entre eux, tant au niveau de l'émission que de la réception, pour limiter l'inductance mutuelle générée par les bobinages du transducteur inductif 21.

Bien entendu le nombre de bobinages émetteurs et le nombre de bobinages récepteurs n'est pas limité à un ou deux. Par ailleurs, le nombre de bobinages émetteurs n'est pas nécessairement identique au nombre de bobinages récepteurs.

### 1.2. Manche

Le manche 12 est composé d'un tube formant moyen de préhension du détecteur 1. Le tube est creux pour permettre le logement d'une batterie du détecteur. Le tube creux est ouvert à son extrémité opposée à la tête pour permettre l'introduction/le retrait de la batterie (non représentée).

Le manche 12 comprend également un couvercle amovible à son extrémité libre pour coiffer l'ouverture du tube creux. Le couvercle est fixé au tube creux par vissage, clipsage ou tout autre élément de fixation connu de l'homme du métier.

Dans le mode de réalisation illustré à la figure 1, le couvercle comprend une plaque circulaire et une jupe à sa périphérie, la paroi intérieure de la jupe incluant un filetage destiné à coopérer avec un filetage complémentaire disposé sur une portion d'extrémité de la paroi externe du tube creux.

### 1.3. Le corps

### 1.3.1. Unité de traitement

Le corps 13 comprend une unité de traitement telle qu'une carte électronique :
- pour détecter la présence de parties métalliques en fonction des signaux mesurés par le transducteur inductif 21, et
- envoyer une commande d'alerte à une alarme du détecteur.

L'unité de traitement comporte un contrôleur programmé pour commander la fonction de mise en veille du détecteur portatif selon certains critères qui seront décrits plus en détail dans la suite.

Le contrôleur est par exemple un microcontrôleur, un processeur, ou un microprocesseur.

De préférence, le contrôleur est couplé à une mémoire du détecteur pour permettre l'enregistrement de données de configuration de la fonction de mise en veille et d'autres fonctions du détecteur.

L'unité de traitement comporte également un capteur tel qu'un accéléromètre trois axes pour mesurer :
- le déplacement du détecteur, et
- l'orientation du détecteur.

Les capteurs de position formés d'un accéléromètre trois axes sont connus en soi. Ils ne seront donc pas décrits plus en détail par la suite.

### 1.3.2. Alarme

Le corps 13 comprend de plus l'alarme à laquelle la commande d'alerte est envoyée par l'unité de traitement.

Cette alarme peut comporter :
- un vibreur pour faire vibrer le détecteur lorsque du métal est détecté, et/ou
- une diode lumineuse pour illuminer tout ou partie du détecteur lorsque du métal est détecté, et/ou
- un baffle pour émettre un son lorsque du métal est détecté.

### 1.3.3. Moyens de saisie

Le corps 13 comprend enfin des moyens de saisie permettant de paramétrer le détecteur, et plus précisément des fonctionnalités du détecteur.

Les moyens de saisie peuvent être un clavier, un écran tactile, ou tout autre type de moyens de saisie connus de l'homme du métier.

Dans le mode de réalisation illustré à la figure 1, les moyens de saisie comprennent sept touches 131-137 :
- une première touche 131 située dans une portion inférieure du clavier permet d'allumer et d'éteindre le détecteur 1,
- des deuxième 132, troisième 133 et quatrième 134 touches situées au-dessus de la première touche 131 permettent de régler la sensibilité de détection entre une sensibilité faible, une sensibilité moyenne et une sensibilité haute de détection,
- des cinquième 135 et sixième 136 touches situées au-dessus des deuxième, troisième et quatrième touches 132-134 permettent d'allumer ou d'éteindre respectivement la fonctionnalité d'alerte sonore associée et la fonctionnalité d'alerte vibratoire,
- une septième touche 137 permet d'allumer ou d'éteindre la fonctionnalité d'alerte lumineuse.

### 2. Fonction de mise en veille du détecteur

Comme indiqué précédemment, le contrôleur 20 est programmé pour commander l'activation ou la désactivation de la fonction de mise en veille du détecteur portatif 1.

L'activation ou la désactivation de la fonction de mise en veille dépend des signaux reçus du transducteur 21 et du capteur 22.

Plus précisément, le contrôleur 20 est relié au capteur 22 d'une part, et au transducteur inductif 21 d'autre part. Ceci permet au transducteur 21 et au capteur 22 de transmettre les signaux qu'ils mesurent au contrôleur 20. Si ces signaux reçus satisfont certains critères, alors le contrôleur 20 commande l'activation ou la désactivation de la fonction de mise en veille.

### 2.1. Activation de la fonction de mise en veille

L'activation de la fonction de mise en veille par le contrôleur 20 est basée sur un certain nombre de conditions. Si ces conditions sont satisfaites, alors le contrôleur 20 commande l'activation de la fonction de mise en veille du détecteur 1.

Ces conditions dépendent des mesures réalisées par le capteur 22 et le transducteur inductif 21.

Par exemple dans un mode de réalisation, la fonction de mise en veille du détecteur 1 est activée si pendant une période de temps prédéterminée :
- l'amplitude du champ électromagnétique (mesuré par le transducteur inductif 21) est constante,
- l'orientation du détecteur (mesurée par le capteur 22) est constante, et
- le déplacement du détecteur (mesuré par le capteur 22) est nul.

Lorsque les trois critères précédents doivent être satisfaits pour activer la fonction de mise en veille, la période de temps prédéterminée peut être assez brève, par exemple de l'ordre de dix secondes. En effet durant l'examen d'une personne à contrôler, il est peu probable que l'opérateur maintienne le détecteur 1 immobile pendant plus de dix secondes. Bien entendu, la période de temps prédéterminée peut être supérieure à dix secondes.

Pour limiter encore les risques de mise en veille intempestif du détecteur 1, le critère relatif à l'orientation peut être plus précis. Notamment, la condition sur l'orientation du détecteur 1 peut être considérée comme satisfaite uniquement lorsque le détecteur 1 est en position horizontal pendant la période de temps prédéterminée. Ceci permet de limiter encore les risques d'activation de la fonction de mise en veille au cours de l'examen d'une personne à contrôler. En effet, le détecteur est généralement utilisé en position vertical durant un examen, le détecteur étant uniquement orienté horizontalement pour balayer le dessus des épaules de l'individu à inspecter.

Dans un autre mode de réalisation, la fonction de mise en veille du détecteur est activée si pendant une période de temps prédéterminée :
- l'amplitude du signal mesuré par le transducteur inductif 21 est constante, et
- l'orientation du détecteur mesurée par l'accéléromètre est constante.

Dans ce cas, la période de temps prédéterminée peut être prévue plus longue - par exemple quarante secondes - pour éviter que le détecteur ne se mette en veille au cours de l'examen d'une personne à contrôler.

Dans tous les cas, lorsque les critères d'activation de la fonction de mise en veille sont satisfaits, le contrôleur 20 commande l'activation de la fonction de mise en veille.

Le transducteur 21 n'est plus alimenté par la batterie du détecteur 1. Ainsi, le transducteur 21 n'émet plus de champ magnétique. Ceci permet de limiter la consommation d'énergie du détecteur.

Par contre, le contrôleur 20 ainsi que le capteur 22 restent alimentés par la batterie du détecteur 1. En effet, la désactivation de la fonction de mise en veille par le contrôleur 20 dépend des signaux du capteur 22.

### 2.2. Désactivation de la fonction de mise en veille

La désactivation de la fonction de mise en veille par le contrôleur 20 est basée sur une ou plusieurs conditions que doivent vérifier les mesures réalisées par le capteur 22. Ces conditions peuvent être cumulatives ou alternatives.

Par exemple dans un mode de réalisation, la fonction de mise en veille du détecteur 1 est désactivée si :
- l'orientation du détecteur (mesurée par le capteur 22) varie, et/ou
- le déplacement du détecteur (mesuré par le capteur 22) est non nul.

Bien entendu, la désactivation de la fonction de mise en veille peut dépendre d'une seule de ces conditions dans certains modes de réalisation.

Dans tous les cas, lorsque les critères de désactivation sont satisfaits, le contrôleur 20 commande la désactivation de la fonction de mise en veille. Le transducteur 21 est à nouveau alimenté par la batterie du détecteur 1 et passe dans un état actif d'émission d'un champ magnétique.

### 2.3. Principe de fonctionnement

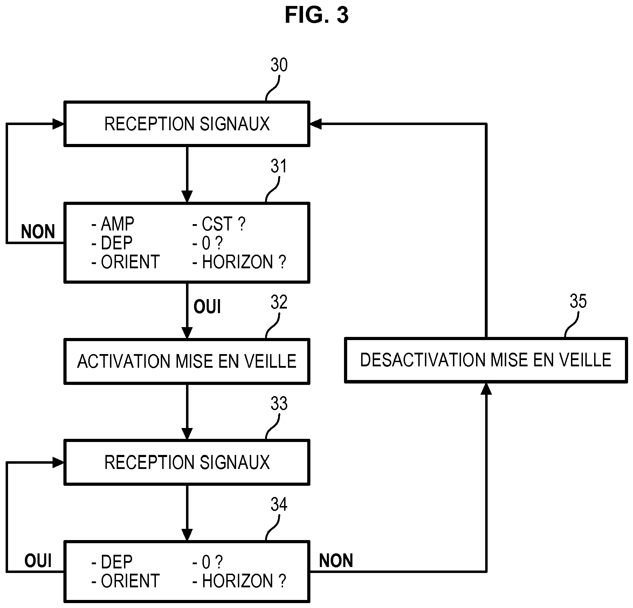

On va maintenant décrire plus en détails le principe de fonctionnement du détecteur 1 en référence la figure 3.

Lors de l'examen d'une personne à contrôler, l'opérateur utilise le détecteur 1 pour examiner une personne à contrôler. Il déplace le détecteur à proximité du corps de la personne à contrôler pour balayer toute la surface de celui-ci.

L'unité de traitement et le contrôleur 20 reçoivent les signaux issus du transducteur 21 et du capteur 22.

Si la personne porte du métal sur elle, l'unité de traitement envoie une commande d'alerte à l'alarme du détecteur 1 : le détecteur 1 vibre et/ou émet un signal sonore et/ou émet un signal lumineux. Sinon, aucune commande d'alerte n'est envoyée par l'unité de traitement.

Une fois la personne examinée, l'opérateur pose le détecteur 1 sur un plan horizontal qui peut être métallique ou non. Si le plan horizontal est métallique, l'unité de traitement envoie une commande d'alerte à l'alarme du détecteur 1 qui vibre et/ou sonne et/ou s'illumine.

En parallèle, le contrôleur 20 reçoit (étape 30) les signaux issus du transducteur 21 et du capteur 22. Le contrôleur 20 vérifie (étape 31) alors si les critères d'activation de la fonction de mise en veille du détecteur 1 sont satisfaits.

Si pendant la période de temps prédéterminée (10 secondes par exemple) :
- l'amplitude du champ électromagnétique (mesuré par le transducteur inductif 21) est constante,
- l'orientation du détecteur (mesurée par le capteur 22) est horizontale, et
- le déplacement du détecteur (mesuré par le capteur 22) est nul,
alors le contrôleur (20) commande l'activation de la fonction de mise en veille (étape 32).

Le détecteur arrête de vibrer et/ou sonner et/ s'illuminer et l'alimentation en énergie du transducteur 21 est coupée.

Une fois le détecteur 1 mis en veille, le transducteur 21 ne génère plus de champ magnétique, ce qui limite les risques de perturbations et d'interférences électromagnétiques générés par le détecteur. Par ailleurs, l'énergie électrique consommée par le détecteur est réduite, le transducteur 21 n'étant plus alimenté en énergie.

Lors du passage d'une autre personne à contrôler, l'opérateur saisit le détecteur 1. Ceci induit une mise en mouvement du détecteur 1 et un changement de son orientation. Les signaux mesurés par le capteur 22 concernant l'orientation et le déplacement du détecteur sont envoyés au contrôleur 20 (étape 33) qui détecte le changement de l'orientation du détecteur et/ou son déplacement (étape 34). Plus précisément, le contrôleur vérifie que l'une (au moins) des conditions suivantes est vérifiée :
- la valeur de déplacement du détecteur varie pendant un intervalle de temps donné, et/ou
- la valeur d'orientation du signal mesuré par le capteur varie pendant l'intervalle de temps donné.

Bien entendu, la durée de l'intervalle de temps peut être différente de la durée de la période de temps prédéterminée. Par exemple, la durée de l'intervalle de temps peut être de l'ordre de la seconde ou de la milliseconde en fonction de la fréquence de mesure du capteur 22.

Le contrôleur commande la désactivation de la fonction de mise en veille (étape 35). Le transducteur 21 est réalimenté en énergie et le détecteur 1 peut être utilisé pour examiner la personne à contrôler.

## Revendications

1. Détecteur (1) portatif pour la détection de métal, le détecteur incluant :
- une tête (11) s'étendant longitudinalement et comportant un transducteur inductif (21) pour la mesure d'une variation de son inductance et/ou pour la mesure de courants parasitaires induits dans les métaux à détecter, et
- un corps (13) incluant un contrôleur (20) programmé pour commander l'activation ou la désactivation d'une fonction de mise en veille du détecteur,
**caractérisé en ce que** le détecteur (1) comprend en outre un capteur (22) pour mesurer un déplacement du détecteur (1), et/ou pour mesurer l'orientation du détecteur (1), et le contrôleur (20) commande l'activation de la fonction de mise en veille si les conditions suivantes sont vérifiées :
- l'amplitude du signal mesuré par le transducteur inductif est constante pendant une période de temps prédéterminée, et
- la valeur de déplacement du signal mesuré par le capteur est nulle pendant cette période de temps prédéterminée ou
- la valeur d'orientation du signal mesuré par le capteur est constante pendant cette période de temps prédéterminée.

2. Détecteur selon la revendication 1, dans lequel le contrôleur (20) commande l'activation de la fonction de mise en veille si les conditions suivantes sont vérifiées :
- l'amplitude du signal mesuré par le transducteur inductif est constante pendant une période de temps prédéterminée, et
- la valeur de déplacement du signal mesuré par le capteur est nulle pendant cette période prédéterminée, et
- la valeur d'orientation du signal mesuré par le capteur est constante pendant cette période prédéterminée.

3. Détecteur selon l'une des revendications 1 ou 2, dans lequel le contrôleur (20) commande l'activation de la fonction de mise en veille si la valeur d'orientation est telle que la tête du détecteur s'étend dans un plan horizontal.

4. Détecteur selon l'une des revendications 1 à 3, dans lequel le capteur (22) est un accéléromètre trois axes.

5. Détecteur selon l'une des revendications 1 à 4, dans lequel le contrôleur (20) commande la désactivation de la fonction de mise en veille en fonction des signaux reçus du capteur.

6. Détecteur selon la revendication 5, dans lequel le contrôleur (20) commande la désactivation de la fonction de mise en veille si au moins l'une des conditions suivantes est vérifiée :
- la valeur de déplacement du détecteur varie pendant un intervalle de temps donné, et/ou
- la valeur d'orientation du signal mesuré par le capteur varie pendant l'intervalle de temps donné.

7. Détecteur selon l'une des revendications 5 ou 6, dans lequel le contrôleur (20) commande la désactivation de la fonction de mise en veille si la valeur d'orientation du signal mesuré par le capteur est différente d'une valeur d'orientation de référence dans laquelle la tête du détecteur s'étend dans un plan horizontal.

## Patentansprüche

1. Tragbarer Detektor (1) zur Metalldetektion, wobei der Detektor umfasst:
- einen Kopf (11), der sich längs erstreckt und einen induktiven Wandler (21) für die Messung einer Variation seiner Induktivität und/oder für die Messung von in den zu detektierenden Metallen induzierten parasitären Strömen umfasst, und
- einen Körper (13), der einen Regler (20) umfasst, der programmiert ist, die Aktivierung oder Deaktivierung einer Standby-Funktion des Detektors zu befehlen,
**dadurch gekennzeichnet, dass** der Detektor (1) des Weiteren einen Sensor (22) zum Messen einer Bewegung des Detektors (1) und/oder zum Messen der Ausrichtung des Detektors (1) umfasst, und der Regler (20) die Aktivierung der Standby-Funktion befiehlt, wenn folgende Bedingungen verifiziert sind:
- die Amplitude des von dem induktiven Wandler gemessenen Signals ist konstant während einer vorbestimmten Zeitdauer und
- der Bewegungswert des von dem Sensor gemessenen Signals ist null während dieser vorbestimmten Zeitdauer oder
- der Ausrichtungswert des von dem Sensor gemessenen Signals ist konstant während dieser vorbestimmten Zeitdauer.

2. Detektor nach Anspruch 1, wobei der Regler (20) die Aktivierung der Standby-Funktion befiehlt, wenn folgende Bedingungen verifiziert sind:
- die Amplitude des von dem induktiven Wandler gemessenen Signals ist konstant während einer vorbestimmten Zeitdauer und
- der Bewegungswert des von dem Sensor gemessenen Signals ist null während dieser vorbestimmten Zeitdauer und
- der Ausrichtungswert des von dem Sensor gemessenen Signals ist konstant während dieser vorbestimmten Zeitdauer.

3. Detektor nach einem der Ansprüche 1 oder 2, wobei der Regler (20) die Aktivierung der Standby-Funktion befiehlt, wenn der Ausrichtungswert so ist, dass sich der Kopf des Detektors in einer horizontalen Ebene erstreckt.

4. Detektor nach einem der Ansprüche 1 bis 3, wobei der Sensor (22) ein dreiachsiger Beschleunigungssensor ist.

5. Detektor nach einem der Ansprüche 1 bis 4, wobei der Regler (20) die Deaktivierung der Standby-Funktion in Abhängigkeit von den von dem Sensor empfangenen Signalen befiehlt.

6. Detektor nach Anspruch 5, wobei der Regler (20) die Deaktivierung der Standby-Funktion befiehlt, wenn mindestens eine der folgenden Bedingungen verifiziert ist:
- der Bewegungswert des Detektors variiert während eines gegebenen Zeitintervalls und/oder
- der Ausrichtungswert des von dem Sensor gemessenen Signals variiert während des gegebenen Zeitintervalls.

7. Detektor nach einem der Ansprüche 5 oder 6, wobei der Regler (20) die Deaktivierung der Standby-Funktion befiehlt, wenn sich der Ausrichtungswert des von dem Sensor gemessenen Signals von einem Referenzausrichtungswert unterscheidet, bei dem sich der Kopf des Detektors in einer horizontalen Ebene erstreckt.

## Claims

1. A portable detector (1) for metal detection, the detector including:
- a head (11) extending longitudinally and comprising an inductive transducer (21) for measuring a variation in its inductance and/or for measuring parasite currents caused in the metals to be detected, and
- a body (13) including a controller (20) programmed to control the
activation or the deactivation of a standby function of the detector, **characterised in that** the detector (1) also comprises a sensor (22) for measuring displacement of the detector (1), and/or for measuring the orientation of the detector (1), and the controller (20) controls the activation of the standby function if the following conditions are satisfied:
- the amplitude of the signal measured by the inductive transducer is constant over a predetermined time period, and
- the displacement value of the signal measured by the sensor is zero over this predetermined time period, or
- the orientation value of the signal measured by the sensor is constant over this predetermined time period.

2. The detector according to Claim 1, in which the controller (20) controls the activation of the standby function if the following conditions are satisfied:
- the amplitude of the signal measured by the inductive transducer is constant over a predetermined time period, and
- the displacement value of the signal measured by the sensor is zero over this predetermined period, and
- the orientation value of the signal measured by the sensor is constant over this predetermined period.

3. The detector according to one of Claims 1 or 2, in which the controller (20) controls the activation of the standby function if the orientation value is such that the head of the detector extends in a horizontal plane.

4. The detector according to one of Claims 1 to 3, in which the sensor (22) is a three-axle accelerometer.

5. The detector according to one of Claims 1 to 4, in which the controller (20) controls the deactivation of the standby function as a function of the signals received from the sensor.

6. The detector according to Claim 5, in which the controller (20) controls the deactivation of the standby function if at least one of the following conditions is satisfied:
- the displacement value of the detector varies over a given time interval, and/or
- the orientation value of the signal measured by the sensor varies over the given time interval.

7. The detector according to one of Claims 5 or 6, in which the controller (20) controls the deactivation of the standby function if the orientation value of the signal measured by the sensor is different from an orientation reference value in which the head of the detector extends in a horizontal plane.
